(19) **Europäisches Patentamt / European Patent Office / Office européen des brevets**

(11) **EP 3 546 890 B1**

(12) # EUROPEAN PATENT SPECIFICATION

(45) Date of publication and mention of the grant of the patent:
**23.12.2020 Bulletin 2020/52**

(51) Int Cl.:
*G01C 21/34* *(2006.01)*        *G01C 22/00* *(2006.01)*
*A63B 22/06* *(2006.01)*

(21) Application number: **18382211.3**

(22) Date of filing: **27.03.2018**

(54) **METHOD, SYSTEM AND COMPUTER PROGRAM PRODUCT FOR COMPUTING ROUTES**

VERFAHREN, SYSTEM UND COMPUTERPROGRAMMPRODUKT ZUR BERECHNUNG VON ROUTEN

PROCÉDÉ, SYSTÈME ET PRODUIT-PROGRAMME D'ORDINATEUR POUR CALCULER DES ITINÉRAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietors:
- **Fundación Tecnalia Research & Innovation**
  **20009 Donostia-San Sebastian, Guipuzcoa (ES)**
- **Universidad del Pais Vasco - Euskal Herriko Unibertsitatea (UPV/EHU)**
  **48940 Leioa (ES)**
- **Universidad De Malaga**
  **29071 Málaga (ES)**

(72) Inventors:
- **OSABA, Eneko**
  **20009 San Sebastián - Guipúzcoa (ES)**
- **DEL SER, Javier**
  **20009 San Sebastián - Guipúzcoa (ES)**
- **BILBAO, Miren Nekane**
  **48940 Leioa (ES)**

- **NEBRO, Antonio**
  **29071 Málaga (ES)**

(74) Representative: **Balder IP Law, S.L.**
**Paseo de la Castellana 93**
**5ª planta**
**28046 Madrid (ES)**

(56) References cited:
- HRNCIR J ET AL: "Practical Multicriteria Urban Bicycle Routing", IEEE TRANSACTIONS ON INTELLIGENT TRANSPORTATION SYSTEMS IEEE USA, vol. 18, no. 3, March 2017 (2017-03), pages 493-504, XP002784966, ISSN: 1524-9050, DOI: 10.1109/TITS.2016.2577047
- CAGGIANI LEONARDO ET AL: "A real time multi-objective cyclists route choice model for a bike-sharing mobile application", 2017 5TH IEEE INTERNATIONAL CONFERENCE ON MODELS AND TECHNOLOGIES FOR INTELLIGENT TRANSPORTATION SYSTEMS (MT-ITS), IEEE, 26 June 2017 (2017-06-26), pages 645-650, XP033138602, DOI: 10.1109/MTITS.2017.8005593

EP 3 546 890 B1

**Description**

**TECHNICAL FIELD**

The present invention relates to the field of transportation and mobility. In particular, it relates to methods and systems for route calculation and planning. The invention focuses especially on the calculation and construction of routes to be performed by bike or on foot.

**STATE OF THE ART**

In the last couple of decades a growing number of route planning systems have been developed, which are available for the community of users, such as bikers, runners or hikers. These tools, mostly accessible from different platforms, with deployable versions for computers, smartphones or tablets, are flexible enough to let users comfortably query routes in any place and time. In all cases, one of the characteristics shared by all route planners is that the provided portfolio of routes are strictly based on parameters that the user enters as an input.

Regarding bike route planning, some proposals have been made. For example, Turverey, R.J. et al. have proposed (Charlottesville bike router planner. In: Systems and Information Engineering Design Symposium, IEEE (2010) 68-72) a web-based platform to help cyclists determine safe and efficient routes by calculating routes using a weighted combination of five different metrics, which are considered to optimize a trade-off among various safety and distance-related factors.

In another proposal, Hrncír, J. et al. (Practical multicriteria urban bicycle routing. IEEE Transactions on Intelligent Transportation Systems 18(3) (2017) 493-504) tackle a multi-criteria bicycle routing problem and develop a set of heuristics for speeding up the multi-criteria route search between two points (origin and destination) by optimizing the comfort, duration and inclination of the route. The heuristic used in this proposal is an extension of the standard multi-criteria label-setting algorithm (Martins, E.Q.V.: On a multicriteria shortest path problem. European Journal of Operational Research 16(2) (1984) 236-245).

Another interesting example is the one proposed by Caggiani, L. et al. (A real time multi-objective cyclists route choice model for a bike-sharing mobile application. In: IEEE International Conference on Models and Technologies for Intelligent Transportation Systems, IEEE (2017) 645-650), which provides users with an appropriate starting and ending bike hiring station. To this end, the suggested origin station is set to the nearest one satisfying the requirements of the user, whereas a similar criterion is applied for selecting the destination station. Besides, the system informs the user with the best path to follow according to time, distance, pollution and safety. Additionally, users can select an alternative route according to the parameter that they are willing to prioritize.

However, there is a need to develop new multi-objective route planning methods and systems for generation of open random routes, that is to say, for computing routes starting from a certain location, without imposing a route destination.

**DESCRIPTION OF THE INVENTION**

The computer-implemented method and system for open routes planning described in the present disclosure intends to solve the shortcomings of prior-art methods. The method and system of the present disclosure computes routes starting from a known location and complying with and certain time constraints. The method and system also bear in mind two different objectives: distance and safety of the route. The method and system are grounded on heuristics algorithms, such as multi-objective bio-inspired optimization algorithms. In accordance with the present invention, a computer-implemented method, a route planning system and a computer program product as set forth in claims 1, 11 and 15 are provided. Further embodiments of the invention are disclosed in the dependent claims.

A first aspect of the invention relates to a computer-implemented method for computing open routes, comprising: providing the initial location coordinates ($lat^O$, $lon^O$) of the user and a maximum time duration $T^{max}$ for a route, digitally assigning in a random way destination location coordinates ($(lat_p^{Np}, lon_p^{Np})$, $lon_p^{Np}$), a value of safety preference $S_p$, a value of inclination preference $I_p$ and a value of duration preference $D_p$, wherein $0 \leq S_p \leq 1$, $0 \leq I_p \leq 1$ and $0 \leq D_p \leq 1$, and wherein $S_p + I_p + D_p = 1$, applying a heuristic algorithm for digitally calculating a candidate route $r_p$ by means of a route planning engine, said candidate route $r_p$ starting at the initial location coordinates ($lat^O$, $lon^O$), ending at the destination location coordinates ($(lat_p^{Np}, lon_p^{Np})$, ), fulfilling said values of safety preference $S_p$, inclination preference $I_p$ and duration preference $D_p$, and for digitally checking whether the calculated candidate route $r_p$ fulfils the time

constraints regarding said maximum time duration $T^{max}$ and a time duration tolerance value and, if the time constraints are fulfilled, selecting said route and calculating a security value and a distance value associated to the route, and if the time constraints are not fulfilled, discarding the candidate route, repeating the steps of digitally assigning in a random way destination location coordinates, a value of safety preference, a value of inclination preference and a value of duration preference, digitally calculating a candidate route and digitally checking the fulfilment of time constraints in the calculated route and if applicable, calculating a security value and a distance value for the route, until a set of selected routes has been obtained by balancing the Pareto trade-off between the route safety level and the distance of the route.

In embodiments of the invention, the time duration tolerance value is either provided by the user or assigned by default.

In embodiments of the invention, the heuristic algorithm is a population-based bio-inspired algorithm.

In embodiments of the invention, the security value associated to each route depends on the route length, inclination profile of the route and maximum speed admitted for motor vehicles in the route.

In embodiments of the invention, each calculated route $r_i$ is given by a variable-length sequence of segments ( $(s_i^1, ..., s_i^{Ni})$, wherein $s_i^j$ denotes the j-th segment of route $r_i$ and $N_i$ the overall number of segments of the entire route, wherein each segment $s_i^j$ is composed by a set of parameters $s_i^j = \{(lat_i^{j,o}, lon_i^{j,o}), (lat_i^{j,d}, lon_i^{j,d}), d_i^j, t_i^j, \alpha_i^j, v_i^{j,max}$ that characterize the segment in terms of its latitude/longitude extremes (°: origin, d: destination), its length $d_i^j$, the time $t_i^j$ taken to traverse it, its inclination profile $\alpha_i^j$ and maximum speed $v_i^{j,max}$, wherein $d_i^j > 0$, $t_i^j > 0$, $0 < \alpha_i^j < 90$ and $0 < v_i^{j,max} < V^{max}$, wherein $V^{max}$ is the maximum admissible road vehicle speed as per the legislation of the scenario at hand. The overall distance of the calculated route is preferably given by the sum of the segments' distance $f_D(r_i) = \sum_{j=1}^{N_i} d_i^j$.

The overall time of the calculated route is preferably given by the sum of segments' time $T(r_i)$

$$(r_i) = \sum_{j=1}^{N_i} t_i^j.$$

In embodiments of the invention, each calculated route has a measure of route safety calculated as follows:

$$f_S(r_i) = \sum_{j=1}^{N_i}(d_i^j/cos\alpha_i^j)^{v_i^{j,max}/V^{max}}.$$

In embodiments of the invention, the heuristic algorithm further ranks and sorts the selected routes in terms of safety and distance.

In embodiments of the invention, the method further comprises depicting on a digital map displayed on a screen of an electronic device a plurality of selected routes, together with their distance values a safety values.

The method is preferably a method for computing open bike routes.

A second aspect of the invention relates to a route planning system comprising processing means, a routing platform having route generation functionality and a framework for multi-objective optimization for implementing a multi-objective solver, the system being configured to perform the steps of the method previously disclosed.

In embodiments of the invention, the routing platform comprises at least one of a map-based web, a smartphone interface and a REST API for its use with third-party applications.

In embodiments of the invention, the system further comprises a digital street map file or files and a digital elevation model.

The system is preferably a system for computing open bike routes.

A third aspect of the invention relates to a computer program product comprising computer program instructions/code for performing the method of the first aspect of the invention.

A fourth aspect of the invention relates to a computer-readable memory/medium that stores program instructions/code for performing the method of the first aspect of the invention.

In sum, a method for planning routes has been proposed. The method formulates the optimality of explored routes from a multi-criteria or multi-objective approach. The method provides the users (such as cyclists, runners or hikers) with diverse sets of suggested routes, hence narrowing the amount and diversity of information provided to users for making their decision.

With respect to conventional methods and systems for route planning, such as routes by bike, which are typically calculated by choosing origin and destination points, the method and system of the present disclosure take into account, for the problem formulation, the consideration of time constraints (at least upper trip time constraints and tolerance to upper trip time constraint) to model the case where the planning system is used for e.g. leisure/sport, and the derivation of a quantitative metric to evaluate the degree of safety associated to a given route with respect to its topological profile and the speed of motor vehicles along its segments. Besides, different bio-inspired multi-objective solvers may be used to efficiently balance the Pareto trade-off between the safety level and the distance of the route, always subject to the imposed time constraints. Examples of the solvers are: NSGA-II, MOEA/D, SMS-EMOA and SMPSO. A Pareto-optimal set of routes produced by any of these bio-inspired multi-objective solvers is provided to the user, so that he/she has the freedom to choose the one that matches his/her preferences with respect to the considered objectives.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a schematic diagram of the routing scenario on which the method and system according to embodiments of the invention are based. It also shows three possible examples of routes provided by the system and their objective functions.

Figure 2 shows a block diagram of the architecture of the system deployed in the present disclosure.

Figures 3A to 3C show estimated Pareto fronts with the best hypervolume values obtained by four compared algorithms for the flat (figure 3A), hybrid (figure 3B) and hilly (figure 3C) scenarios. The line stands for the reference Pareto front approximation.

Figure 4 shows (up) reference Pareto fronts obtained for the three considered scenarios (flat, hybrid, hilly) and (down) routes corresponding to the colored points in the reference Pareto front of the hilly scenario.

## DESCRIPTION OF A WAY OF CARRYING OUT THE INVENTION

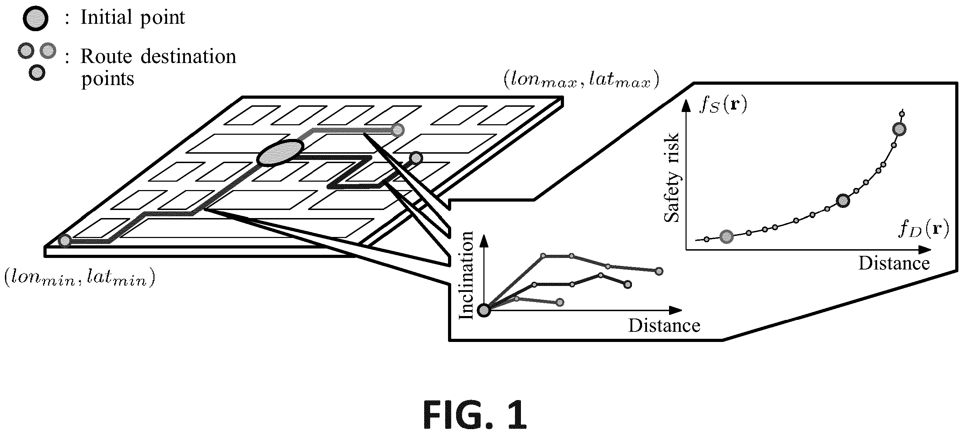

The method and system of the present disclosure optimize the planning of routes, such as bike routes, bearing in mind two different objectives: distance and safety of the route. In addition, the calculated routes must comply with certain time constraints, including maximum time duration for the route and preferably also minimum time duration for the route. The minimum time duration for the route may be given with respect to the maximum time duration, such as a percentage thereof, for example representing how flexible the user is to accept a route time duration lower than the selected maximum time duration. Alternatively, the minimum time duration may be given as a fixed value provided by the user. Figure 1 shows the scenario model on which the method and system of this disclosure is based. A set of routes **R** is calculated. **R** is a variable-length set of trip routes rooted on ($lat^O$, $lon^O$). As shown in figure 1 (left), in order to perform the calculation of routes, the initial location (represented as a grey circle in the figure) needs to be provided. The coordinates ($lat^O$, $lon^O$) of this initial position indicate the geographical point where all potential routes depart from, emulating e.g. a bike ride (or walk, or running) that a user is willing to enjoy from home within his/her limited leisure time. For simplicity in subsequent algorithm explanations, it is assumed that ($lat^O$, $lon^O$) $\in$ [$lat_{min}$, $lat_{max}$] x [$lon_{min}$, $lon_{max}$], i.e. the scenario and the produced routes themselves are located within a maximum square area, as represented in figure 1. On the scenario model of figure 1 (left), three exemplary possible routes have been depicted.

The three of them start from the initial position ($lat^O$, $lon^O$), while each route has a different destination point. The three exemplary routes shown in figure 1 have different destinations, because the method and system compute open routes.

In order for the method and system to calculate a set of open routes $r_i$, the user must provide the initial position ($lat^O$, $lon^O$) from which the calculated routes must depart and certain time constraints that the routes must fulfil including maximum time duration $T^{max}$ for the route. In other words, an upper bound $T^{max}$ for the trip time $T(r_i)$ needed to complete route $r_i$ is imposed, meaning that routes $r_{i'}$ for which $T(r_i) > T^{max}$ are not allowed to appear in the eventually output set of routes. This means that the computed routes have in principle different time duration, and therefore different distance, provided that the duration of each route is shorter than $T^{max}$.

Other time constraints that may be additionally used are, among others: user's tolerance with respect to the admissible maximum time for the route or with respect to minimum time duration for the route. In embodiments of the invention, the minimum trip time may be defined as a fraction $\rho \in R$ [0, 1] of $T^{max}$, such that a feasible route $r_i$ should meet $T(r_i) \geq T^{min} = \rho \cdot T^{max}$ in all cases. This parameter p is input by the user to reflect his/her tolerance (lower threshold) with respect to the admissible maximum time for the bike ride. In embodiments of the invention, the user must provide the tolerance parameter p or the algorithm assigns a value for this parameter by default (for example, $\rho = 0.7$). In embodiments of the invention, a second parameter $\beta > 1$ may be used to reflect the user's tolerance to exceed the maximum time duration $T^{max}$ for the route.

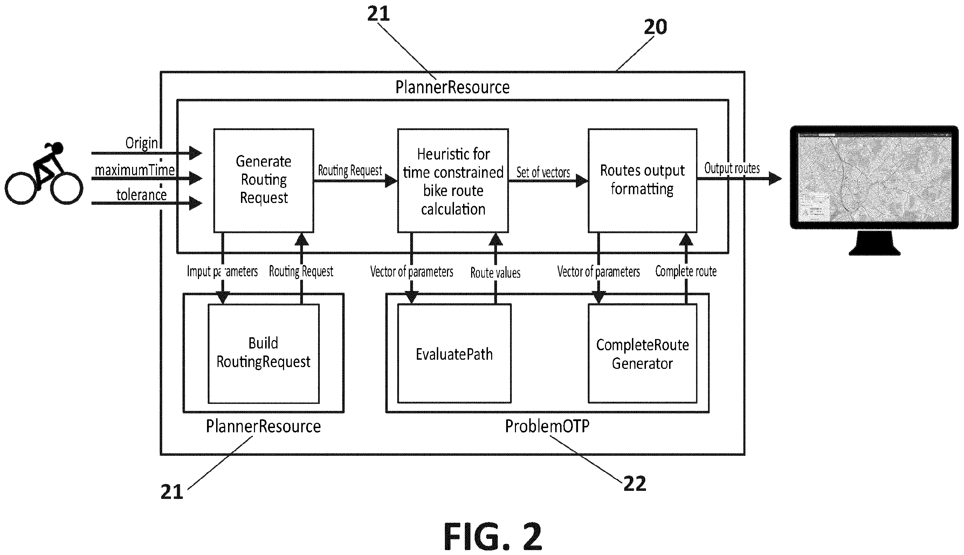

Figure 2 shows a block diagram of the architecture of a developed route planning system according to embodiments of the invention. The system uses a routing platform 20 having route generation functionality. The routing platform 20 comprises two main blocks: a planner resource block 21 and a problem solving block 22 (also referred to as Problem OTP). The planner resource block 21 manages the generation of routing requests, the building of routing requests, the heuristic for time constraint route calculation and the formatting for routes output, as schematized in figure 2. The problem solving block 22 comprises a route planning engine, also referred to as routing engine or route planner in this text, which performs the path evaluation and the generation of complete routes, as schematized in figure 2. The route planning engine is called by a heuristic algorithm for the computation and evaluation of open routes. The path evaluation is implemented as a function which is recurrently called by the algorithm to return the length and safety of the route provided as an input, as disclosed next. The generator of complete routes is implemented as a function which returns the entire path calculated by the route planning engine of the routing platform 20 from its encoded representation for visualization and further analysis. The route planning engine calculates the routes using the heuristic algorithm. The heuristic algorithm iteratively generates new petitions for route calculation (routing requests), as shown in the planner resource block 21, and calls the route planning engine comprised in the problem solving block 22 in order to obtain a route and evaluate its quality in terms of the established criteria.

In embodiments of the invention, the OTP (Open Trip Planner) platform is used (https://github.com/opentripplanner Accessed: 2017-11-30) as routing platform 20. OTP is an open source framework for mono and multi-modal journey planning. It follows a client-server model, and provides a map-based web and smartphone interface, as well as a REST API for its use with third-party applications. Among the advantages of OTP platform: OTP is open source in its entirety, easing its adaptation to specific simulation scenarios; OTP efficiently works with OSM, providing the structure to automatically build the street network; OTP is well documented, updated, with an active, growing community of developers. OTP includes a REST API for journey planning and a map-based Javascript client. As OTP is open source, both parts have been adapted and modified to enable constraining the routes in time, and the output of all segments comprising the generated route. Consequently, several Java classes have been created in order to deploy these functionalities. OTP can also create travel time contour visualizations and compute accessibility indicators for planning and research applications. OTP operates with different open data standards, such as GeoTIFF, Protocol Buffers, General Transit Feed Specification (GTFS) and Open Street Map (OSM). The shown architecture also integrates a java framework for multi-objective optimization, such as the jMetal framework, jointly with OTP, for implementing the considered multi-objective solvers which are described later in this text.

In addition to the routing platform 20 shown in figure 2, the route planning system requires processing means, such as a processor, and data storage means, such as a memory, in order to store and execute the heuristic algorithm for the route calculation and evaluation. The planner resource block 21 has enough memory resources to store the best routes that are being obtained from the calls or requests performed to the problem solving block 22. In addition, the planner resource block 21 stores in the data storage means the routes configurations that are considered optimal, in order to later dump the optimal routes configurations to different files.

Besides, in order to verify how the proposed system and method and the considered heuristic solvers behave in geographically diverse setups, two different real data sources are required: 1) a digital street map file or files; and 2) a digital elevation model. Experimental results have been obtained (later discussed) using these real data sources. In embodiments of the invention, in both cases open data sources are used. Regarding the digital street map file, in embodiments of the invention, OSM (Open Street Map) map files are used. The maps and street networks of the simulated scenarios have been retrieved in the form of OSM map files from the Planet OSM public repository (https://planet.osm.org/. Accessed: 2017-11-30). The downloaded OSM tiles contain all nodes, ways and relations required to build the map. OSM files are directly consumed by OTP, which automatically constructs the full road network. Regarding the digital elevation model, in embodiments of the invention, a Digital Elevation Model has been used and directly consumed by OTP in GeoTIFF format. This format is a public domain metadata standard, which allows georeferencing information to be embedded within a TIFF file. OTP uses these files for assigning the corresponding elevation to the entire street network, and it is employed for calculating the route flatness and safety.

Once the user has provided the initial position ($lat^O, lon^O$) from which the calculated routes must depart and certain time constraints he/she wishes to impose to the calculated routes, the algorithm calculates each route of the set of routes **R** as follows:

First, coordinates for a destination location are randomly assigned, taking into account that they belong to a certain square area. For example, they may belong to a maximum square area [$lat_{min}$, $lat_{max}$] x [$lon_{min}$, $lon_{max}$], as illustrated in figure 1. This may be implemented as follows: latitude varies with respect to the origin in a random value between 0 and |$lat_{max}$ - $lat_{min}$|. If this random value implies that the destination latitude is out of the range [$lat_{min}$, $lat_{max}$], then the random value is corrected to be either $lat_{max}$ or |$at_{min}$, depending on which of the two ends is exceeded. The same is done for the longitude.

Then, in order to be able to take into account safety and distance preferences for the potential routes, the algorithm randomly assigns a value of safety preference $S_p \in R$ [0, 1], a value of inclination preference $I_p \in R$ [0, 1] and a value of duration preference $D_p \in R$ [0, 1]. The safety preference $S_p$ stands for the priority that the routing platform 20, such as the OTP route planner, should grant to the safety of the route. If this value is high, routes with a high safety will be better rated and output by the engine. The inclination preference $I_p$ refers to the importance that the planner endows to the aggregate inclination of the route. The duration preference $D_p$ refers to the importance that the route planner gives to the duration of the route. It must be ensured that $S_p + I_p + D_p = 1 \ \forall r_p$ in the population.

So, regarding the encoding of routes -so that they can be handled by their heuristic operators, which are operators comprised in the heuristic algorithm or solver in order to deal with routes-, the numerical encoding does not represent a route by itself, but rather a set of factors that can be used to calculate a route by means of the route planning generation engine (such as OTP engine). This way, each candidate route $r_p$ within the P-sized populations is a vector comprising the following five values: latitude $lat_p^{Np}$ and longitude $lon_p^{Np}$ of the destination location of the route $r_p$, safety preference $S_p$, inclination preference $I_p$ and duration preference $D_p$. Within the generic routes $r_i$, route $r_p$ is a route that belongs to population P. Regarding the latitude $lat_p^{Np}$ and longitude $lon_p^{Np}$, rather than using the true coordinates in the candidate, the relative difference between the origin location ($lat^O$, $lon^O$) and the coordinates ($lat_p^{Np}$, $lon_p^{Np}$) is preferably used instead. In other words, preferences $S_p$, $I_p$ and $D_p$ are criteria to be prioritized according to their value when a route is calculated.

Along execution of the algorithm, these values (latitude $lat_p^{Np}$ and longitude $lon_p^{Np}$ of the destination location of the route $r_p$, safety preference $S_p$, inclination preference $I_p$ and duration preference $D_p$) are randomly modified, repaired to ensure that $S_p + I_p + D_p = 1 \ \forall r_p$ in the population, and delivered to the route planning engine (such as OTP engine) as new routing requests (see figure 2) to produce routes based on the new set of preferences. In other words, the route planning engine calculates routes making use of a heuristic algorithm. So, for each set of five values assigned by the algorithm, a route is calculated, that starts at the initial position ($lat^O$, $lon^O$) provided by the user and whose duration is within the time constraints also introduced by the user. This is done by the route planning engine, such as OTP route planning engine. This is done as follows: while the route planning engine calculates a new route, it scores the paths it chooses in order to decide which paths (streets, etc.) to use. This score is assigned as a function of the three parameters $S_p$, $I_p$, $D_p$, as follows (for a route called route A): score_route_A = security of route A * $S_p$ + inclination of route_A * $I_p$ + duration of route A * $D_p$. The route planning engine calculates a new route, for example route A, which has certain inclination (inclination of route A), certain security (security of route A) and certain duration (duration of route A). These values inclination, security and duration are calculated while the route is calculated and traced.

For every new route calculated, it is checked whether the time constraints are indeed fulfilled. This is done by the solver. If they are fulfilled, the route is considered candidate route. If the time constraints are not fulfilled, the route is discarded. The candidate route is then evaluated in terms of safety and distance. In other words, a security value and a distance value are calculated for that route. As explained later, the security value depends on the distance (route length), inclination profile and maximum speed admitted for motor vehicles in the route. The algorithm used for modifying route parameters, calculating the routes and evaluating the routes in a computationally efficient fashion is a heuristic algorithm, preferably a population-based bio-inspired algorithm or solver, used to efficiently balance the Pareto trade-off between the safety level and the distance of the route, always subject to the imposed time constraints. R $\in$ $\mathcal{R}$

So, for all the routes in the set **R** (a variable-length set of trip routes rooted on ($lat^O$, $lon^O$)), that belong to set $\mathcal{R}$ (the number of all possible route sets satisfying the time constraints), the route safety must be maximized while the overall distance of the route must also be maximized. In other words, the planning of routes must be optimized by balancing two parameters associated to each route: distance and safety of the route.

In embodiments of the invention, a route $r_i$ is given by a variable-length sequence of segments ( $(s_i^1, ..., s_i^{Ni}$ ), wherein $s_i^j$ denotes the j-th segment of route $r_i$ and $N_i$ the overall number of segments of the entire route. The route planner of the routing platform 20 provides the calculated route. The calculated route is divided into segments. Each segment $s_i^j$ is composed by a set of parameters,

$$s_i^j = \{(lat_i^{j,o}, lon_i^{j,o}), (lat_i^{j,d}, lon_i^{j,d}), d_i^j, t_i^j, \alpha_i^j, v_i^{j,max}$$

that characterize the segment in terms of its latitude/longitude extremes (°: origin, d: destination), its length $d_i^j \in R^+$, the time $t_i^j \in R^+$ taken to traverse it for example by bike, its inclination profile $\alpha_i^j \in R\ [0, 90]$, and maximum speed $v_i^{j,max} \in R\ [0, V^{max}]$ of the road traffic along the segment (for example 50 km/h in an urban segment), where $V^{max}$ is the maximum admissible road vehicle speed as per the legislation of the scenario at hand (for example, 120 km/h). The inclination profile $\alpha_i^j$ is obtained from the digital elevation model (DEM). The maximum speed $v_i^{j,max}$ is obtained from the information available at the digital street map file, such as OSM. The length $d_i^j$ and time $t_i^j$ are obtained from the routes calculated by the route planner. Given that continuous routes are searched for, they should all fulfill that

$$(lat_i^{j,o}, lon_i^{j,o}) = (lat^O, lon^O)$$ and

$$(lat_i^{j,d}, lon_i^{j,d}) = (lat_i^{j+1,o}, lon_i^{j+1,o}), \quad \forall j = 1, ..., N_j - 1.$$

Based on the above notation, the overall distance of the route is given by $f_D(r_i) = \sum_{j=1}^{N_i} d_i^j$ , that is to say, the sum of segments' distance, and the overall time of the route is given by $T(r_i) = \sum_{j=1}^{N_i} t_i^j$ , i.e. the sum of segments' distance/time.

The level of safety when a bike, runner or hiker or the like traverses route $r_i$ should be driven by two different aspects: first, the inclination of its segments should be as close to 0 as possible (namely, a flat segment) so that the user has good visibility and, for example in the case of a bike, the rider does not lose control of the bike due to either a high speed and risk to encounter unavoidable moving obstacles along the segment (downhill), or a physically demanding uphill segment that could put in danger the health of the user and his/her capacity to react against vehicles in the opposite direction. So, in embodiments of the invention, the inclination of the segment as per $\alpha_i^j$ is very relevant when quantifying the degree of safety of a segment. Therefore, in embodiments of the invention, a measure of route safety can be defined as follows:

$$f_S(r_i) = \sum_{j=1}^{N_i} (d_i^j / \cos\alpha_i^j)^{v_i^{j,max}/V^{max}}$$

from where it is straightforward to note that the higher the value of $f_s(r_i)$ is, the less safe route $r_i$ will be. In other words, $f_s(r_i)$ must be conceptually conceived as a measure of the risk assumed by a user when traversing route $r_i$, which should be minimized in the problem formulation.

So, once the user has introduced the desired route origin (*lat*$^O$, *lon*$^O$) and the temporal constraints (at least $T^{max}$), an algorithm, in particular a bio-inspired muti-objective solver, which makes use of the route planner, is executed in order to obtain a set of routes **R** that fulfill the imposed constraints (origin and temporal constrains). **R** denotes a

variable-length set of trip routes rooted on (*lat, lon*). The routing problem address by the method and system of this disclosure can be formulated as the discovery of a set of routes that balances their safety and distance values in a Pareto optimal fashion satisfying, at the same time, at least upper bounds in regards to their total duration. In embodiments in which the imposed time constraints are the maximum time duration $T^{max}$ for the route and minimum time duration for the route $T^{min} = \rho \cdot T^{max}$ ($\rho \in R$ [0, 1] of $T^{max}$), the routing problem can be mathematically expressed as follows:

$$\underset{\mathbf{R}}{minimize}\ \boldsymbol{fs(r)},\ \underset{\mathbf{R}}{maximize}\ \boldsymbol{fD(r)},$$

$$\text{subject to } T(r_i) \le T^{max},$$

$$T(r_i) \ge T^{min} = \rho \cdot T^{max},$$

$$(\boldsymbol{lat_i^{1,o}}, \boldsymbol{lon_i^{1,o}}) = (lat^{O}, lon^{O}) \qquad \forall \mathbf{ri} \in \mathbf{R},$$

$$(\boldsymbol{lat_i^{j,d}}, \boldsymbol{lon_i^{j,d}}) = (\boldsymbol{lat_i^{j+1,o}}, \boldsymbol{lon_i^{j+1,o}}), \forall \boldsymbol{j} = \mathbf{1}, \ldots, \boldsymbol{N_j} - \mathbf{1}.$$

where $R \in \mathcal{R}$ and $\mathcal{R}$ is the number of all possible route sets satisfying the time constraints.

**[0046]** In embodiments of the invention, if the duration tolerance parameter p is not provided by the user together with the maximum time duration $T^{max}$, a tolerance parameter p is assigned by the algorithm. The value of the assigned tolerance parameter p may be, for example, 0.7.

**[0047]** The algorithm calculates new routes by randomly changing the coordinates for a destination location and the safety, inclination and distance preferences and repeating the checking for determining whether they are candidates or not. All the candidates are evaluated in terms of safety and distance by a heuristic algorithm, and then ranked and sorted as defined by the heuristic algorithm at hand. The algorithm used for evaluating the routes in a computationally efficient fashion is preferably a population-based bio-inspired algorithm or solver.

**[0048]** The user is thus provided with a set P [$r_1$, $r_2$, $r_3$ ... $r_P$] having the best found routes with their associated values of security and distance (length). Each route provided by the route planning engine has associated values of security and distance, which are then evaluated by the heuristic algorithm in order to select the best routes. Turning back to figure 1, two graphs are depicted (right side of figure 1) with information regarding the routes evaluation obtained from the execution of the heuristic algorithm. In a first graph, for each route, its length (distance) is represented versus its inclination. Thus, a comparison between distance and inclination of all the selected routes can be established. In a second graph, providing the safety risk versus distance, all the routes shown in the map (left side of figure 1) are depicted. The red point represents the value of the objective function of the red route on the map. The blue point represents the value of the objective function of the blue route on the map. The green point represents the value of the objective function of the green route on the map. This means that the red route is the longest in distance, but at the same time the least secured. On the contrary, the green route is the shortest one, but the safest one. As already said, the heuristic algorithm used for calculating and evaluating the routes in a computationally efficient fashion is preferably a population-based bio-inspired algorithm or solver. In embodiments of the invention, the population-based bio-inspired algorithm may be NSGA-II (Non-dominated Sorting Genetic Algorithm II). NSGA-II is a generational genetic algorithm that applies a Pareto ranking scheme to foster the convergence to the Pareto front and the crowding distance density estimator to promote the diversity of the front of solutions it is managing. NSGA-II is reported by Kalyanmoy D. et. al. in "A Fast and Elitist Multiobjective Genetic Algorithm: NSGA-II", IEEE Transactions on Evolutionary Computation, Vol. 6, n° 2, April 2002, p. 182-197.

**[0049]** In embodiments of the invention, the population-based bio-inspired algorithm may be MOEA/D (Multi-Objective Evolutionary Algorithm Based on Decomposition). MOEA/D is a steady-state evolutionary algorithm based on an aggregative approach with the aim of decomposing a multi-objective problem in a set of single-objective subproblems that are solved at the same time by taking into account information of a number of neighbors (see for example Qingfu Zhang and Hui Li, "MOEA/D: A Multiobjective Evolutionary Algorithm Based on Decomposition", IEEE Transactions on Evolutionary Computation, Vol. 11, nº 6, December 2007, p. 712-731). In particular, the MOEA/DE version may be used, which uses differential evolution instead of the mutation and crossover operators of the original proposal.

**[0050]** In embodiments of the invention, the population-based bio-inspired algorithm may be SMS-EMOA (S-Metric Selection EMOA). SMS-EMOA is also a steady-state evolutionary algorithm which is based on NSGA-II but, instead of using the crowding distance density estimator, it applies the concept of hypervolume contribution. The idea is that, after applying the ranking procedure, the solution belonging to the last rank having the lowest contribution to the hypervolume of the set of solutions of that rank is removed. SMS-EMOA is reported by Beume N. et. al. in "SMS-EMOA: Multiobjective

selection based on dominant hypervolume", European Journal of Operational Research (2006), doi:10.1016/j.ejor.2006.08.008.

In embodiments of the invention, the population-based bio-inspired algorithm may be SMPSO (Speed-constrained Multi-objective PSO). SMPSO is particle swarm optimization algorithm whose main features is the use of a velocity constraint mechanism, to avoid the particles to fly beyond the limits of the search space, and an external bounded-sized archive to store the non-dominated solutions found during the search. This archive is used also for leader selection and the crowding distance density estimator is used to remove solutions when it becomes full. SMPSO is reported by Nebro, A.J. et al. in "SMPSO: A New PSO-based Metaheuristic for Multi-objective Optimization", IEEE Symposium on Computational intelligence in multi-criteria decision-making, IEEE (2009) 66-73.

So, a set of routes P [$r_1$, $r_2$, $r_3$ ... $r_P$] has been discovered and provided, that balances their safety and distance values in a Pareto optimal fashion satisfying, at the same time, the time constraints imposed by the user.

The algorithm is executed until a termination criterion is fulfilled. The termination criterion is a previously defined maximum number of evaluations. This maximum number can be defined, for example, to be 5,000. The proposed method and system have been assessed as bike route planner in a realistic environment using Open Trip Planner (OTP) as the simulation framework. Experimental results from three different use cases located in the city of Bilbao (Spain) are discussed next, all using real data sources, namely, the Open Street Map of the city and its Digital Elevation Model (DEM). In order to assess the empirical performance of the 4 multi-objective optimization algorithms considered to deal with the posed routing problem, several computer experiments have been carried out over different square areas located in the city of Bilbao (Spain), bounded by coordinates ($lat^{min}$, $lat^{max}$) = ($lat^O$ - 0.1425, $lat^O$ + 0.1425) and ($lon^{min}$, $lon^{max}$) = ($lon^O$ -0.0665, $lon^O$ +0.0665). Differences between scenarios yield from the selection of different initial points ($lon^O$, $lat^O$) for the routes, so that topological changes in the urban areas enclosed by such squares are expected to arise from the performed experiments. These selected scenarios are characterized by a flat, a highly slopped (hilly) and a hybrid terrain profile. This tailored choice permits to verify how the proposed system and method and the considered heuristic solvers behave in geographically diverse setups.

The NSGA-II, SMS-EMOA, MOEA/D and SMPSO algorithms have been used. As the bike routing is a continuous optimization problem, the algorithms have been configured with commonly accepted settings, without any attempt at finding their best parameter configuration. A summary of the parameters is included in Table 1. All the algorithms have a population size of 100 individuals (or particles in the case of SMPSO) and use a polynomial mutation operator which is applied with a probability of 0.2 (according to the typical value of 1.0 / $L$, where $L$ = 5 is the number of decision variables of the problem) and a distributed index equal to 20.0; the maximum number of function evaluations has been fixed to 5000. Both NSGA-II and SMS-EMOA apply a simulated binary crossover, with a probability of 1.0 and a distributed index equal to 20.0. MOEA/D follows a rand/1/bin differential evolution scheme, with parameters $CR$ = 1.0 and $F$ = 0.5. The values of the neighborhood size, the neighborhood selection probability, and maximum number of replace solutions are 20, 0.9, and 2, respectively. SMSPO has an external archive of a maximum size of 100 particles and applies the crowding distance density estimator.

**Table 1.** Parameter setting of the heuristics considered in the experimental benchmark.

| Algorithm | Parameter | Value |
|---|---|---|
| All | Population/ swarm size<br>Evaluations<br>Independent runs<br>Mutation<br>\| Probability<br>\| Distribution index $\eta$ m | 100 individuals/particles<br>5000<br>15<br>Polynomial mutation<br>0.2 (once per every 5 decision variables)<br>20.0 |
| NSGA-II<br>SMS-EMOA | Crossover<br>\| Probability<br>\| Distribution index $\eta$ m | Simulated binary crossover<br>1.0<br>20 |
| MOEA/D | Differential evolution scheme<br>\| CR<br>\| F | Rand/1/bin<br>1.0<br>0.5 |
|  | Neighborhood size<br>Neighborhood selection probability<br>Max. number of replaced solutions | 20<br>0.9<br>2 |
| SMPSO | Archive size | 100 |

(continued)

| Algorithm | Parameter | Value |
|---|---|---|
| | Density estimator | Crowding distance |

For proving the robustness of the methods and extracting fair and rigorous conclusions, 15 independent runs have been made per algorithm for all problem scenarios. To assess the performance of the algorithms, the so-called hypervolume has been used, a Pareto compliant quality indicator that takes into account both the convergence and diversity of the Pareto front approximations returned by the solvers included in the benchmark.

Since the true Pareto front of the optimization problem is unknown, a reference Pareto front for each instance has been generated by combining all the non- dominated solutions computed in all the executions of all the algorithms. This front will be used as a reference to compute the hypervolume. Furthermore, in order to assess whether the differences between the algorithm results have statistical significance, the Wilcoxon rank-sum text has been applied, a non-parametric statistical hypothesis test which allows for a pairwise comparison between two samples. A significance level of 5% has been considered, meaning that the differences are unlikely to have occurred by chance with a probability of 95%.

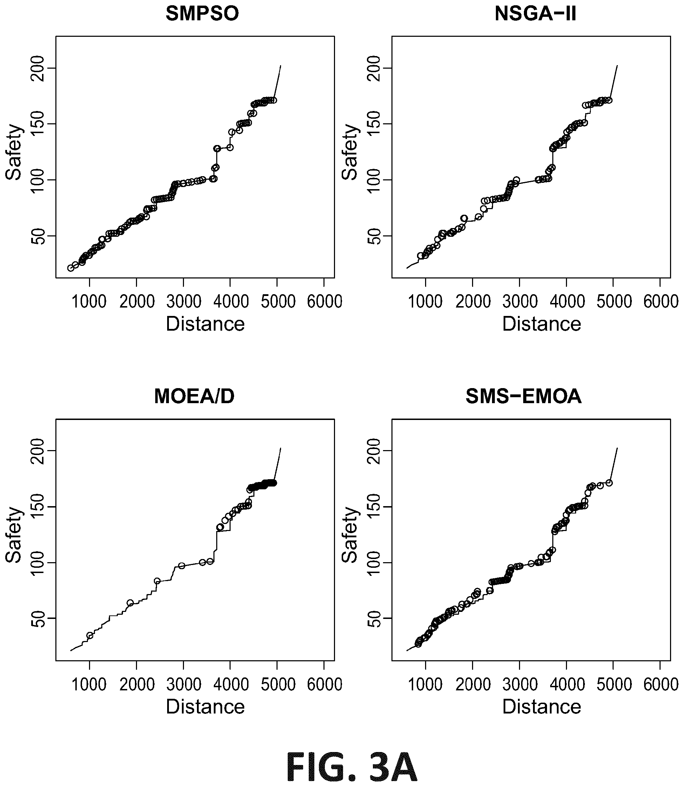

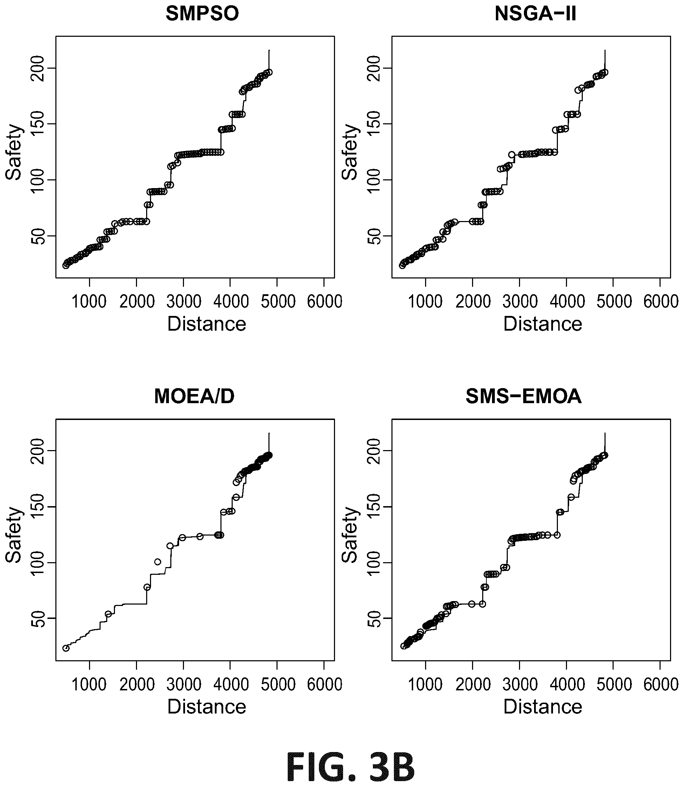

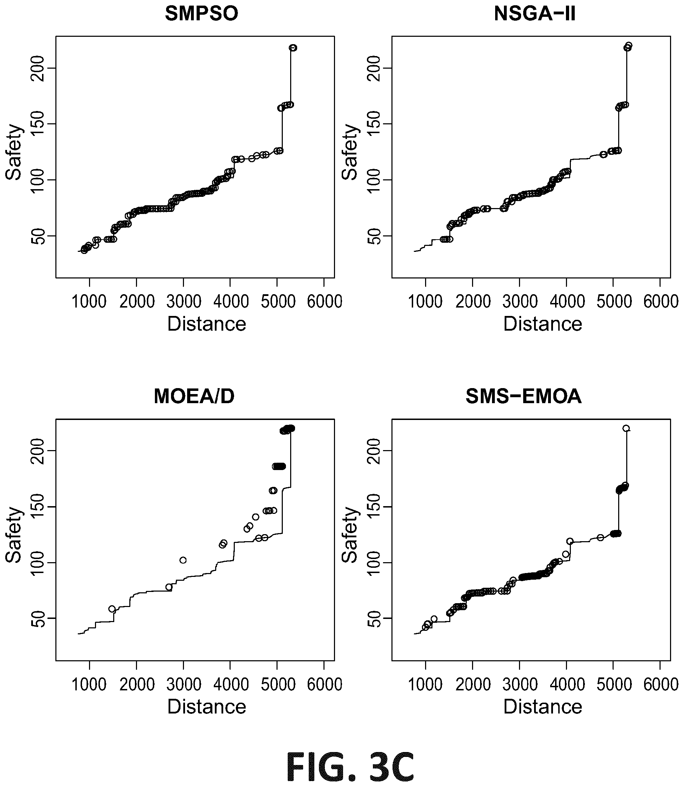

To illustrate the fronts that each of the four compared algorithms have produced, figures 3A to 3C show the approximations corresponding to the best hypervolume values for the flat (figure 3A), hybrid (figure 3B) and hilly scenario (figure 3C). To ease the visualization of the solutions, the reference Pareto front is included as a continuous line. It can be observed how SMPSO excels at generating a set of solutions that are on top of the reference Pareto front and that are uniformly spread, including the extreme solutions. By contrast, MOEA/D fails to generate a front with accurate convergence and widespread diversity.

The results of the hypervolume values obtained by the four metaheuristics are presented in Table 2, which includes the median and interquartile range of the 15 independent runs per algorithm and problem instance. The three cells of SMPSO have the best indicator values. The two upper cells of NSGA-II (flat and hybrid scenarios) and the lower cell of SMS-EMOA have the second best indicator values. It can be observed that the particle swarm optimization algorithm SMPSO has produced the best (highest) values in the three considered scenarios. NSGA-II and SMS-EMOA have yielded, respectively, two and one second best values.

**Table 2.** Median and Inter Quartile Range (IQR) of the hypervolume values obtained by the algorithms. Best and second best median results have dark and light gray backgrounds, respectively.

| | SMPSO | NSGA-II | MOEA/D | SMS-EMOA |
|---|---|---|---|---|
| Flat scenario | $5.80e-01_{8.8e-03}$ | $5.68e-01_{6.2e-03}$ | $5.27e-01_{7.5e-03}$ | $5.64e-01_{1.2e-02}$ |
| Hybrid scenario | $5.95e-01_{3.8e-03}$ | $5.79e-01_{1.0e-02}$ | $5.30e-01_{1.8e-02}$ | $5.74e-01_{1.2e-02}$ |
| Hilly scenario | $7.00e-01_{8.4e-03}$ | $6.13e-01_{5.0e-02}$ | $5.71e-01_{2.2e-02}$ | $6.20e-01_{8.2e-02}$ |

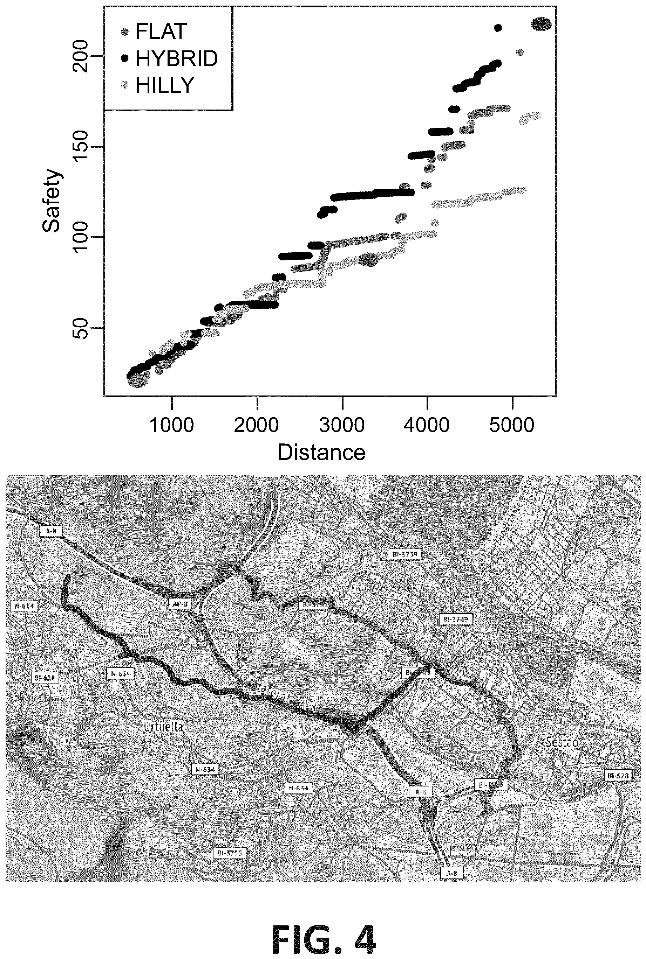

In order to assess the quality of the solutions, figure 4 shows (up) the reference Pareto fronts for each of the three scenarios, and (down) a visual representation of the routes corresponding to the points in the estimated Pareto front of the hilly scenario. Indeed, differences are visually clear in regards to the distance of every route: interesting is to note that the one in green traverses a urban area with sharp slopes (namely, the urban core of the town of Portugalete within the metropolitan area of *Gran Bilbao*).

In sum, a method and system for designing time-constrained routes have been developed from a multi-criteria perspective. The focus has been placed on generating a group of open-destination routes based on three input parameters: origin, maximum trip time and tolerance. The problem has been modeled as a bi-objective paradigm balancing two conflicting objectives: the distance of the route and its safety level, the latter blending together the inclination of segments composing the route, their length and the speed of vehicles along each segment. For efficiently tackling this problem, four bio-inspired multi-objective optimization methods have been used (namely, NSGA-II, SMS-EMOA, MOEA/D, and SMPSO), and applied to three different real-world scenarios placed in Bilbao, Spain. Experiments have been conducted in a realistic simulation environment based on Open Trip Planner as the software simulation platform.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for computing open routes, comprising:

providing the initial location coordinates ($lat^O$, $lon^O$) of the user and a maximum time duration $T^{max}$ for a route,

digitally assigning in a random way destination location coordinates ( $lat_p^{Np}$, $lon_p^{Np}$ ), a value of safety preference $S_p$, a value of inclination preference $I_p$ and a value of duration preference $D_p$, wherein $0 \leq S_p \leq 1$, $0 \leq I_p \leq 1$ and $0 \leq D_p \leq 1$, and wherein $S_p + I_p + D_p = 1$,

applying a heuristic algorithm for digitally calculating a candidate route $r_p$ by means of a route planning engine, said candidate route $r_p$ starting at the initial location coordinates ($lat^O$, $lon^O$), ending at the destination location

coordinates ( $lat_p^{Np}$, $lon_p^{Np}$ ), fulfilling said values of safety preference $S_p$, inclination preference $I_p$ and duration preference $D_p$, and for digitally checking whether the calculated candidate route $r_p$ fulfils the time constraints regarding said maximum time duration $T^{max}$ and a time duration tolerance value and,

if the time constraints are fulfilled, selecting said route and calculating a security value and a distance value associated to the route, and
if the time constraints are not fulfilled, discarding the candidate route,

repeating the steps of digitally assigning in a random way destination location coordinates, a value of safety preference, a value of inclination preference and a value of duration preference, digitally calculating a candidate route and digitally checking the fulfilment of time constraints in the calculated route and if applicable, calculating a security value and a distance value for the route, until a set of selected routes has been obtained by balancing the Pareto trade-off between the route safety level and the distance of the route.

2. The method of claim 1, wherein the time duration tolerance value is either provided by the user or assigned by default.

3. The method of any preceding claim, wherein the heuristic algorithm is a population-based bio-inspired algorithm.

4. The method of any preceding claim, wherein the security value associated to each route depends on the route length, inclination profile of the route and maximum speed admitted for motor vehicles in the route.

5. The method of any preceding claim, wherein each calculated route $r_i$ is given by a variable-length sequence of segments ( $s_i^1$, ..., $s_i^{Ni}$ ), wherein $s_i^j$ denotes the j-th segment of route $r_i$ and $N_i$ the overall number of segments of the entire route, wherein each segment $s_i^j$ is composed by a set of parameters

$s_i^j = \{(lat_i^{j,o}, lon_i^{j,o}), (lat_i^{j,d}, lon_i^{j,d}), d_i^j, t_i^j, \alpha_i^j, v_i^{j,max}$ that characterize the segment in terms of its latitude/longitude extremes (°: origin, d: destination), its length $d_i^j$, the time $t_i^j$ taken to traverse it, its inclination profile

$\alpha_i^j$ and maximum speed $v_i^{j,max}$, wherein $d_i^j > 0$, $t_i^j > 0$, $0 < \alpha_i^j < 90$ and $0 < v_i^{j,max} < V^{max}$, wherein $V^{max}$ is the maximum admissible road vehicle speed as per the legislation of the scenario at hand.

6. The method of claim 5, wherein the overall distance of the calculated route is given by the sum of the segments'

distance $f_D(r_i) = \sum_{j=1}^{N_i} d_i^j$.

7. The method of either claim 5 or 6, wherein the overall time of the calculated route is given by the sum of segments'

time $\mathbf{T}(r_i) = \sum_{j=1}^{N_i} t_i^j$.

8. The method of any of claims 5-7, wherein each calculated route has a measure of route security calculated as follows:

$$f_S(r_i) = \sum_{j=1}^{N_i}(d_i^j/cos\alpha_i^j) \quad {}^{v_i^{j,max}}\!\big/\!{}_{V^{max}}$$

9. The method of any preceding claim, wherein the heuristic algorithm further ranks and sorts the selected routes in terms of security and distance.

10. The method of any preceding claim, further comprising depicting on a digital map displayed on a screen of an electronic device a plurality of selected routes, together with their distance values and security values.

11. A route planning system comprising processing means, a routing platform (20) having route generation functionality and a framework for multi-objective optimization for implementing a multi-objective solver, the system configured to perform the steps of the method of any claims 1-10.

12. The system of claim 11, wherein the routing platform (20) comprises at least one of a map-based web, a smartphone interface and a REST API for its use with third-party applications.

13. The system of any of claims 11-12, further comprising a digital street map file or files and a digital elevation model.

14. The method of any of claims 1-10 or the system of any of claims 11-13, for computing open bike routes.

15. A computer program product comprising computer program instructions/code or a computer-readable memory/medium that stores program instructions/code for performing the method according to any of claims 1-10.


**Patentansprüche**

1. Computerimplementiertes Verfahren zum Berechnen freier Routen, umfassend:

Bereitstellen der Ausgangsortkoordinaten (lat$^O$, lon$^O$) des Nutzers und einer maximalen Zeitdauer T$^{max}$ für eine Route,

digitales Zuweisen nach dem Zufallsprinzip von Zielortkoordinaten ( $lat_p^{Np}$, $lon_p^{Np}$ ), eines Wertes der Sicherheitspräferenz S$_p$, eines Wertes der Neigungspräferenz I$_p$ und eines Wertes der Dauerpräferenz D$_p$, wobei $0 \le S_p \le 1$, $0 \le I_p \le 1$ und $0 \le D_p \le 1$, und wobei S$_p$ + I$_p$ + D$_p$ = 1,

Anwenden eines heuristischen Algorithmus zum digitalen Berechnen einer Kandidatenroute r$_p$ mit Hilfe einer Routenplanungseinheit, wobei die Kandidatenroute r$_p$ bei den Ausgangsortkoordinaten (lat$^O$, lon$^O$) startet, bei den Zielortkoordinaten ( $lat_p^{Np}$, $lon_p^{Np}$ ) endet, die Werte der Sicherheitspräferenz S$_p$, Neigungspräferenz I$_p$ und Dauerpräferenz D$_p$ einhält, und zum digitalen Prüfen, ob die berechnete Kandidatenroute r$_p$ die Zeitbegrenzungen bezüglich der maximalen Zeitdauer T$^{max}$ und einen Zeitdauertoleranzwert einhält, und,

wenn die Zeitbegrenzungen eingehalten werden, Auswählen der Route und Berechnen eines Sicherheitswertes und eines Streckenwertes in Verbindung mit der Route, und,
wenn die Zeitbegrenzungen nicht eingehalten werden, Verwerfen der Kandidatenroute,

Wiederholen der Schritte des digitalen Zuweisens nach dem Zufallsprinzip von Zielortkoordinaten, eines Wertes der Sicherheitspräferenz, eines Wertes der Neigungspräferenz und eines Wertes der Dauerpräferenz, digitales Berechnen einer Kandidatenroute und digitales Prüfen der Einhaltung von Zeitbegrenzungen auf der berechneten Route und, sofern anwendbar, Berechnen eines Sicherheitswertes und eines Streckenwertes für die Route, bis durch Abgleichen des Pareto-Trade-off zwischen dem Routensicherheitsgrad und der Strecke der Route eine Reihe ausgewählter Routen erhalten worden ist.

2. Verfahren nach Anspruch 1, wobei der Zeitdauertoleranzwert entweder vom Nutzer bereitgestellt oder standardmäßig zugewiesen wird.

3. Verfahren nach einem der vorstehenden Ansprüche, wobei der heuristische Algorithmus ein bevölkerungsbasierter bioinspirierter Algorithmus ist.

4. Verfahren nach einem der vorstehenden Ansprüche, wobei der Sicherheitswert in Verbindung mit jeder Route von der Länge der Route, dem Neigungsprofil der Route und der Höchstgeschwindigkeit, die für Kraftfahrzeuge auf der Route zugelassen ist, abhängt.

5. Verfahren nach einem der vorstehenden Ansprüche, wobei jede berechnete Route $r_i$ von einer Sequenz von Segmenten variabler Länge ( $s_i^1$, ..., $s_i^{Ni}$ ) vorgegeben wird, wobei $s_i^j$ das j-te Segment der Route $r_i$ und $N_i$ die Gesamtanzahl von Segmenten der gesamten Route bezeichnet, wobei jedes Segment $s_i^j$ aus einer Reihe von Parametern $s_i^j = \left\{ (lat_i^{j,o}, lon_i^{j,o}), \left( lat_i^{j,d}, lon_i^{j,d} \right), d_i^j, t_i^j, \alpha_i^j, v_i^{j,max} \right.$ besteht, die das Segment hinsichtlich seiner Breiten-/Längen-Extreme (°: Ursprung, d: Ziel), seiner Länge $d_i^j$, des Zeitaufwands $t_i^j$ für seine Überquerung, seines Neigungsprofils $\alpha_i^j$ und der Höchstgeschwindigkeit $v_i^{j,max}$ kennzeichnen, wobei $d_i^j > 0$, $t_i^j > 0$, $0 < \alpha_i^j < 90$ und $0 < v_i^{j,max} < V^{max}$, wobei $V^{max}$ die zulässige Straßenhöchstgeschwindigkeit für Fahrzeuge gemäß der Gesetzgebung des vorliegenden Szenarios ist.

6. Verfahren nach Anspruch 5, wobei die Gesamtstrecke der berechneten Route von der Summe der Streckensegmente $f_D(r_i) = \sum_{j=1}^{N_i} d_i^j$ vorgegeben wird.

7. Verfahren nach Anspruch 5 oder 6, wobei die Gesamtzeit der berechneten Route von der Summe der Zeitsegmente $T(r_i) = \sum_{j=1}^{N_i} t_i^j$ vorgegeben wird.

8. Verfahren nach einem der Ansprüche 5-7, wobei jede berechnete Route über ein Maß an Routensicherheit verfügt, das wie folgt berechnet wird:

$$f_S(r_i) = \sum_{j=1}^{N_i} (d_i^j / cos\alpha_i^j)^{v_i^{j,max}/V^{max}}.$$

9. Verfahren nach einem der vorstehenden Ansprüche, wobei der heuristische Algorithmus die ausgewählten Routen hinsichtlich Sicherheit und Strecke ordnet und sortiert.

10. Verfahren nach einem der vorstehenden Ansprüche, ferner umfassend das Aufzeigen mehrerer ausgewählter Routen auf einer digitalen Karte, die auf einem Bildschirm einer elektronischen Vorrichtung angezeigt wird, zusammen mit deren Streckenwerten und Sicherheitswerten.

11. Routenplanungssystem, umfassend Verarbeitungsmittel, eine Leitweglenkungsplattform (20) mit Routenerstellungsfunktionalität und eine Grundstruktur für multikriterielle Optimierung zur Implementierung eines multikriteriellen Solvers, wobei das System so konfiguriert ist, dass es die Schritte des Verfahrens nach einem der Ansprüche 1-10 ausführt.

12. System nach Anspruch 11, wobei die Leitweglenkungsplattform (20) zumindest eines von einem kartenbasierten Netz, einer Smartphone-Schnittstelle und einer REST API für ihre Verwendung mit Drittanwendungen umfasst.

**13.** System nach einem der Ansprüche 11-12, ferner umfassend eine digitale Straßenkartendatei oder -dateien und ein digitales Höhenmodell.

**14.** Verfahren nach einem der Ansprüche 1-10 oder System nach einem der Ansprüche 11-13 zum Berechnen freier Fahrradrouten.

**15.** Computerprogrammprodukt, umfassend Computerprogrammanweisungen/-code oder einen computerlesbaren Speicher/ein computerlesbares Medium, der/das Programmanweisungen/-code zum Ausführen des Verfahrens nach einem Ansprüche 1-10 umfasst.

**Revendications**

**1.** Méthode mise en œuvre par ordinateur pour calculer des itinéraires libres, comprenant :

la fourniture des coordonnées d'emplacement initial (lat$^O$, lon$^O$) de l'utilisateur et d'une durée temporelle maximale T$^{max}$ pour un itinéraire,

l'attribution numérique, d'une manière aléatoire, de coordonnées d'emplacement de destination ( $lat_p^{Np}$, $lon_p^{Np}$ ), d'une valeur de préférence de sécurité S$_p$, d'une valeur de préférence d'inclinaison I$_p$ et d'une valeur de préférence de durée D$_p$, dans laquelle $0 \leq S_p \leq 1$, $0 \leq I_p \leq 1$ et $0 \leq D_p \leq 1$, et dans laquelle S$_p$ + I$_p$ + D$_p$ = 1, l'application d'un algorithme heuristique pour calculer numériquement un itinéraire candidat r$_p$ au moyen d'un moteur de planification d'itinéraire, ledit itinéraire candidat r$_p$ commençant aux coordonnées d'emplacement initial (lat$^O$, lon$^O$), se terminant aux coordonnées d'emplacement de destination ( $lat_p^{Np}$, $lon_p^{Np}$ ), respectant lesdites valeurs de préférence de sécurité S$_p$, de préférence d'inclinaison I$_p$ et de préférence de durée D$_p$, et pour vérifier numériquement si l'itinéraire candidat calculé r$_p$ respecte les contraintes temporelles relatives à ladite durée temporelle maximale T$^{max}$ et une valeur de tolérance de durée temporelle et,

si les contraintes temporelles sont respectées, la sélection dudit itinéraire et le calcul d'une valeur de sécurité et d'une valeur de distance associées à l'itinéraire, et
si les contraintes temporelles ne sont pas respectées, le rejet de l'itinéraire candidat,

la répétition des étapes de l'attribution numérique, d'une manière aléatoire, de coordonnées d'emplacement de destination, d'une valeur de préférence de sécurité, d'une valeur de préférence d'inclinaison et d'une valeur de préférence de durée, le calcul numérique d'un itinéraire candidat et la vérification numérique du respect des contraintes temporelles dans l'itinéraire calculé et, le cas échéant, le calcul d'une valeur de sécurité et d'une valeur de distance pour l'itinéraire, jusqu'à ce qu'un ensemble d'itinéraires sélectionnés ait été obtenu par un équilibrage du compromis de Pareto entre le niveau de sécurité d'itinéraire et la distance de l'itinéraire.

**2.** Méthode selon la revendication 1, dans laquelle la valeur de tolérance de durée temporelle est soit fournie par l'utilisateur soit attribuée par défaut.

**3.** Méthode selon une quelconque revendication précédente, dans laquelle l'algorithme heuristique est un algorithme bio-inspiré basé sur la population.

**4.** Méthode selon une quelconque revendication précédente, dans laquelle la valeur de sécurité associée à chaque itinéraire dépend de la longueur d'itinéraire, du profil d'inclinaison de l'itinéraire et de la vitesse maximale admise pour les véhicules à moteur sur l'itinéraire.

**5.** Méthode selon une quelconque revendication précédente, dans laquelle chaque itinéraire calculé r$_i$ est donné par une séquence de longueur variable de segments ( $s_i^1$, ..., $s_i^{Ni}$ ), dans laquelle $s_i^j$ désigne le j-ème segment

d'itinéraire $r_i$ et $N_i$ le nombre global de segments de la totalité de l'itinéraire, dans laquelle chaque segment $s_i^j$ est composé par un ensemble de paramètres

$$s_i^j = \{(lat_i^{j,o},\ lon_i^{j,o}),\ (lat_i^{j,d},\ lon_i^{j,d}),\ d_i^j,\ t_i^j,\ \alpha_i^j,\ v_i^{j,max}$$

qui caractérisent le segment en termes de ses extrêmes de latitude/longitude (° : origine, $^d$ : destination), de sa longueur $d_i^j$, du temps $t_i^j$ nécessaire pour le parcourir, de son profil d'inclinaison $\alpha_i^j$ et de la vitesse maximale $v_i^{j,max}$, dans laquelle $d_i^j > 0,\quad t_i^j > 0,\ 0 < \alpha_i^j < 90$ et $0 < v_i^{j,max} < V^{max}$, dans laquelle $V^{max}$ est la vitesse de véhicule routier maximale admissible selon la législation du scénario enjeu.

6. Méthode selon la revendication 5, dans laquelle la distance globale de l'itinéraire calculé est donnée par la somme de la distance des segments $f_D(r_i) = \sum_{j=1}^{Ni} d_i^j$.

7. Méthode selon la revendication 5 ou 6, dans laquelle le temps global de l'itinéraire calculé est donné par la somme du temps des segments $T(r_i) = \sum_{j=1}^{Ni} t_i^j$.

8. Méthode selon l'une quelconque des revendications 5 à 7, dans laquelle chaque itinéraire calculé possède une mesure de sécurité d'itinéraire calculée comme suit :

$$f_s(r_i) = \sum_{j=1}^{Ni} (d_i^j / \cos \alpha_i^j)^{v_i^{j,max} / Vmax}$$

9. Méthode selon une quelconque revendication précédente, dans laquelle l'algorithme heuristique classe et trie en outre les itinéraires sélectionnés en termes de sécurité et de distance.

10. Méthode selon une quelconque revendication précédente, comprenant en outre la représentation, sur une carte numérique affichée sur un écran d'un dispositif électronique, d'une pluralité d'itinéraires sélectionnés, conjointement avec leurs valeurs de distance et leurs valeurs de sécurité.

11. Système de planification d'itinéraire comprenant des moyens de traitement, une plate-forme d'itinéraires (20) ayant une fonctionnalité de génération d'itinéraire et un cadre pour une optimisation à objectifs multiples pour mettre en œuvre un résolveur à objectifs multiples, le système étant configuré pour réaliser les étapes de la méthode selon l'une quelconque des revendications 1 à 10.

12. Système selon la revendication 11, dans lequel la plate-forme d'itinéraires (20) comprend au moins un élément parmi un site Web cartographique, une interface de téléphone intelligent et une API REST pour son utilisation avec des applications tierces.

13. Système selon l'une quelconque des revendications 11 à 12, comprenant en outre un fichier ou des fichiers de plan des rues numériques et un modèle altimétrique numérique.

14. Méthode selon l'une quelconque des revendications 1 à 10 ou système selon l'une quelconque des revendications 11 à 13, pour calculer des itinéraires cyclables libres.

15. Produit programme d'ordinateur comprenant des instructions/un code de programme d'ordinateur ou une mémoire/un support lisible par ordinateur qui stocke des instructions/un code de programme pour réaliser la méthode selon l'une quelconque des revendications 1 à 10.

**FIG. 1**

FIG. 2

## FIG. 3A

**FIG. 3B**

**FIG. 3C**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Charlottesville bike router planner. **TURVEREY, R.J. et al.** Systems and Information Engineering Design Symposium. IEEE, 2010, 68-72
- **HRNCÍR, J. et al.** Practical multicriteria urban bicycle routing. *IEEE Transactions on Intelligent Transportation Systems,* 2017, vol. 18 (3), 493-504
- **MARTINS, E.Q.V.** On a multicriteria shortest path problem. *European Journal of Operational Research,* 1984, vol. 16 (2), 236-245
- A real time multi-objective cyclists route choice model for a bike-sharing mobile application. **CAGGIANI, L. et al.** IEEE International Conference on Models and Technologies for Intelligent Transportation Systems. IEEE, 2017, 645-650
- *OTP (Open Trip Planner) platform is used,* 30 November 2017, https://github.com/opentripplanner

- *Planet OSM public repository,* 30 November 2017, https://planet.osm.org/.
- **KALYANMOY D.** A Fast and Elitist Multiobjective Genetic Algorithm: NSGA-II. *IEEE Transactions on Evolutionary Computation,* April 2002, vol. 6 (2), 182-197
- **QINGFU ZHANG ; HUI LI.** MOEA/D: A Multiobjective Evolutionary Algorithm Based on Decomposition. *IEEE Transactions on Evolutionary Computation,* December 2007, vol. 11 (6), 712-731
- **BEUME N.** SMS-EMOA: Multiobjective selection based on dominant hypervolume. *European Journal of Operational Research,* 2006
- SMPSO: A New PSO-based Metaheuristic for Multi-objective Optimization. **NEBRO, A.J. et al.** IEEE Symposium on Computational intelligence in multi-criteria decision-making. IEEE, 2009, 66-73